# EUROPEAN PATENT APPLICATION

(11) **EP 4 250 028 A1**
(43) Date of publication of application: **27.09.2023**
(21) Application number: 23163431.2
(22) Date of filing: 22.03.2023
(51) Int. Cl.: G05B 19/042

(54) **SETTING DEVICE, PROGRAM, ENVIRONMENT FORMING DEVICE, AND SETTING METHOD**

(30) Priority: 24.03.2022 JP 2022048705
(71) Applicant: Espec Corp., Kita-ku Osaka-shi Osaka 530-8550 (JP)
(72) Inventor: MATSUGUMA, Osamu, Osaka, 530-8550 (JP); KADOWAKI, Akiko, Osaka, 530-8550 (JP); OKAZAWA, Takashi, Osaka, 530-8550 (JP); KADO, Yuuki, Osaka, 530-8550 (JP); ARIGA, Miyuki, Osaka, 530-8550 (JP)
(74) Representative: SSM Sandmair

(57) **Abstract**

A setting device is a setting device that sets operation control information for controlling operation of an environment forming device, the setting device including: an acquisition unit that acquires environment setting information for setting an environmental condition formed by the environment forming device and connection setting information for setting a connection condition between a target object that is loaded with the environmental condition and an external control device; a processing unit that generates the operation control information based on the environment setting information and the connection setting information that are acquired by the acquisition unit; and an output unit that outputs the operation control information generated by the processing unit, in which the processing unit is capable of setting the connection condition independently of setting of the environmental condition.

## Description

### FIELD OF INVENTION

The present invention relates to a setting device, a program, an environment forming device, and a setting method.

### BACKGROUND ART

A setting device according to the background art is disclosed in, for example, JP 2019-15585 A. The operator sets an environmental condition (temperature, humidity, or the like) related to each test step of program operation by inputting data to a setting screen displayed on a display unit of an operation terminal. The setting device sets operation control information for controlling program operation based on the environmental condition acquired from the operation terminal.

In an environment test, there is a case where an external control device such as a power supply device is connected to the environment test device in order to apply a current to a test target object. In this case, the operator sets a connection condition between the external control device and the test target object together with the environmental condition described above by inputting data to the operation terminal. As the connection condition, on or off of a relay between the external control device and the test target object is set.

In a conventional setting device, the connection condition can be set to only one of on and off for each test step. Therefore, in a case of executing a test in which application of a current to the test target object is repeatedly turned on or off in a short time, even if the environmental condition is constant, it is necessary to finely divide the test step in accordance with the switching of on and off of the application of the current. As a result, the data input work by the operator becomes complicated due to the increase in the number of test steps, and the work efficiency decreases.

### SUMMARY OF THE INVENTION

An object of the present invention is to provide a setting device, a program, an environment forming device, and a setting method that can improve work efficiency of data input work by an operator.

A setting device according to one aspect of the present invention is a setting device that sets operation control information for controlling operation of an environment forming device, the setting device including: an acquisition unit that acquires environment setting information for setting an environmental condition formed by the environment forming device and connection setting information for setting a connection condition between a target object that is loaded with the environmental condition and an external control device; a processing unit that generates the operation control information based on the environment setting information and the connection setting information that are acquired by the acquisition unit; and an output unit that outputs the operation control information generated by the processing unit, in which the processing unit is capable of setting the connection condition independently of setting of the environmental condition.

### BRIEF DESCRIPTION OF THE DRAWINGS

Fig. 1 is a view illustrating an overall configuration of an environment test system according to an embodiment of the present invention;
Fig. 2 is a view illustrating a configuration of a setting device;
Fig. 3 is a flowchart presenting a flow of setting processing executed by a data processing unit;
Fig. 4 is a simplified view illustrating an example of an input screen for an environmental condition;
Fig. 5 is a simplified view illustrating an example of an input screen for a connection condition;
Fig. 6 is a simplified view illustrating an example of an input screen on which data is input;
Fig. 7 is a simplified view illustrating an example of an input screen for a connection condition;
Fig. 8 is a simplified view illustrating an example of a setting screen displayed on a display unit of an operation terminal;
Fig. 9 is a view illustrating a configuration of an environment test device according to a first modification; and
Fig. 10 is a view illustrating a configuration of an environment test device according to a second modification.

### DETAILED DESCRIPTION

Hereinafter, an embodiment of the present invention will be described in detail with reference to the drawings. Elements denoted by the same reference signs in different drawings represent the same or corresponding elements.

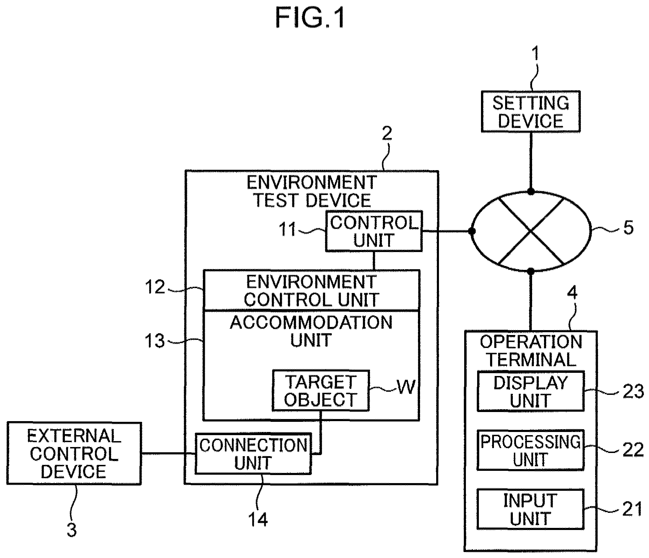

Fig. 1 is a view illustrating an overall configuration of an environment test system according to an embodiment of the present invention. As illustrated in Fig. 1, the environment test system includes a setting device 1, an environment test device 2, an external control device 3, an operation terminal 4, and a communication network 5.

The communication network 5 is an optional communication network such as the Internet or an intranet compatible with an optional communication system such as IP.

The setting device 1 is a server device or the like connected to the communication network 5.

The environment test device 2 is an example of an environment forming device, and is a temperature and humidity test device connected to the communication network 5 in the example of the present embodiment. The temperature and humidity test device evaluates the performance and the like of a target object W by applying temperature stress and humidity stress to the target object W. However, the environment forming device may be a heat treatment device or the like.

The environment test device 2 includes a control unit 11, an environment control unit 12, an accommodation unit 13, and a connection unit 14. The control unit 11 includes a processor such as a CPU. The environment control unit 12 includes a heating device, a cooling device, a humidification device, and a dehumidification device or the like. The accommodation unit 13 is a chamber surrounded by a thermal insulating housing, and the target object W is accommodated therein. The connection unit 14 includes a relay whose on and off are controlled by the control unit 11. The target object W is an electronic component such as a circuit board, for example. The connection unit 14 needs not be configured as a part of the environment test device 2, and may be arranged between the environment test device 2 and the external control device 3.

The external control device 3 is a control device that externally controls the target object W, and is a power supply device for applying a current to the target object W in the example of the present embodiment. The external control device 3 is externally connected to the target object W via the relay included in the connection unit 14. The control unit 11 connects the external control device 3 and the target object W (that is, brings the external control device 3 and the target object W into a conductive state) by turning on the relay, and releases the connection between the external control device 3 and the target object W (that is, brings the external control device 3 and the target object W into an interrupt state) by turning off the relay.

The operation terminal 4 is a personal computer or the like connected to the communication network 5. The operation terminal 4 includes an input unit 21 such as a keyboard or a mouse, a processing unit 22 such as a CPU, and a display unit 23 such as a liquid crystal display.

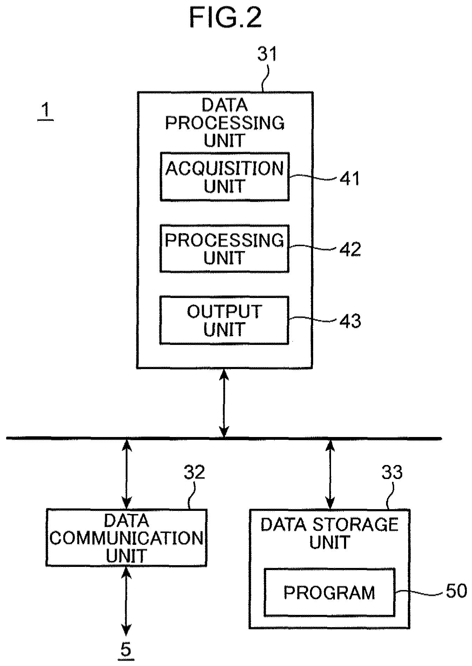

Fig. 2 is a view illustrating the configuration of the setting device 1. As illustrated in Fig. 2, the setting device 1 includes a data processing unit 31, a data communication unit 32, and a data storage unit 33 that are connected to one another via a bus. The data processing unit 31 includes a processor such as a CPU. The data communication unit 32 includes a communication module compatible with a communication system of the communication network 5 such as IP. The data storage unit 33 includes an optional computer-readable storage medium such as an HDD, an SSD, or a semiconductor memory. The data storage unit 33 stores a program 50. The data processing unit 31 includes an acquisition unit 41, a processing unit 42, and an output unit 43 as functions implemented by the CPU executing the program 50 read from the data storage unit 33.

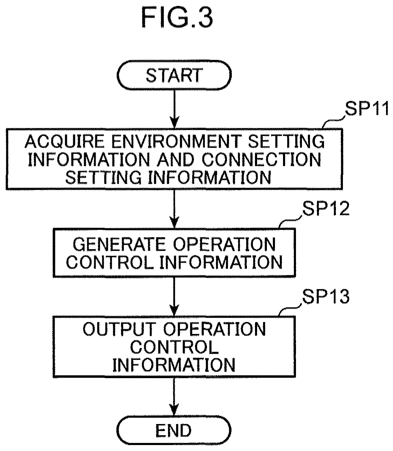

Fig. 3 is a flowchart presenting the flow of setting processing executed by the data processing unit 31.

First, in step SP11, the acquisition unit 41 acquires environment setting information and connection setting information. The environment setting information is information for the environment test device 2 to set environmental condition formed in the accommodation unit 13 by the environment control unit 12. The environmental conditions are a temperature condition and a humidity condition in the example of the present embodiment. The connection setting information is information for setting a connection condition between the target object W and the external control device 3. The connection condition is setting information of on or off of the relay between the target object W and the external control device 3. As described below, the environment setting information and the connection setting information are input to the operation terminal 4 by data input by the operator using the input unit 21, and are transmitted from the operation terminal 4 to the setting device 1 via the communication network 5. The acquisition unit 41 acquires, from the data communication unit 32, the environment setting information and the connection setting information received from the operation terminal 4 by the data communication unit 32.

Next, in step SP12, the processing unit 42 generates operation control information for controlling the operation of the environment test device 2 based on the environment setting information and the connection setting information acquired by the acquisition unit 41 in step SP11. When the operator presses a confirmation button in an input screen 61 described below, operation information to that effect is transmitted from the operation terminal 4 to the setting device 1. The acquisition unit 41 acquires the operation information, whereby the processing unit 42 generates the operation control information by confirming the setting content of the input screen 61 being edited. The environment test device 2 can execute program operation having a plurality of test steps. In the program operation, the environmental condition set for each test step and the connection condition set independently of the setting of the environmental condition are included in the operation control information. The environment test device 2 can execute a constant value operation in which the environmental value of the environmental condition is constant. In the constant value operation, an environmental condition having a constant environmental value and a connection condition set independently of setting of the environmental condition are included in the operation control information. Here, "capable of setting independently" means that a plurality of ons or offs of relays can be set for one environmental condition, that is, the connection condition can be changed and set for one environmental condition. In place of the processing procedure of generating the operation control information after all the operations by the operator are completed (step SP12 is executed only once after step SP11), a processing procedure of sequentially reflecting the operation content in the operation control information every time the operation is performed by the operator (step SP11 and step SP12 are alternately and repeatedly executed) may be adopted. The same applies to the first and second modifications described below.

Next, in step SP13, the output unit 43 outputs the operation control information generated in step SP12 by the processing unit 42. The operation control information output from the output unit 43 is transmitted from the data communication unit 32 to the environment test device 2 via the communication network 5. The control unit 11 controls the operations of the environment control unit 12 and the relay based on the received operation control information.

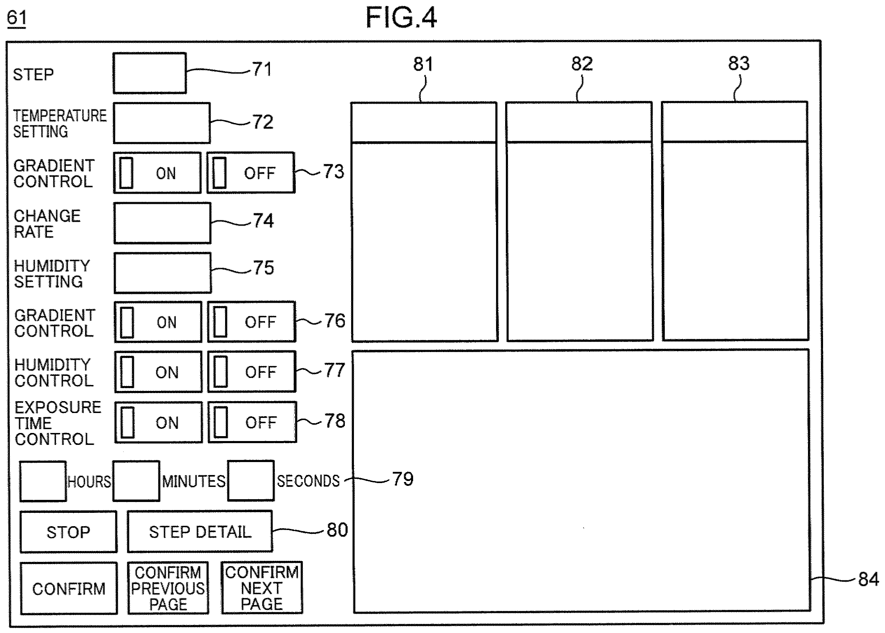

Fig. 4 is a simplified view illustrating an example of the input screen 61 for the environmental condition. Fig. 4 illustrates an example of the input screen 61 in the program operation. Image data of the input screen 61 is transmitted from the setting device 1 to the operation terminal 4 via the communication network 5, and the input screen 61 is displayed on the display unit 23 of the operation terminal 4. The operator inputs data onto the input screen 61 by the input unit 21 with keyboard operation, mouse operation, or the like.

In an input field 71, the number of a test step that is a setting target among a plurality of test steps constituting program operation is input.

In an input field 72, a setting value of temp
erature in the test step is input.

In a selection field 73, the presence or absence of temperature gradient control in the test step is selected.

In an input field 74, a setting value of the temperature change rate in a case of performing the temperature gradient control is input.

In an input field 75, a setting value of humidity in the test step is input.

In a selection field 76, the presence or absence of humidity gradient control in the test step is selected.

In a selection field 77, the presence or absence of humidity control in the test step is selected.

In a selection field 78, the presence or absence of exposure time control in the test step is selected.

In an input field 79, a setting value of the test time in the test step is input.

An icon 80 displayed as "step detail" is selected by click operation or the like when setting a detailed item in the test step. The icon 80 is also selected when calling up the input screen 62 of the connection condition described below regarding the test step.

In setting value display fields 81 to 83, representative setting values having been set regarding each of three consecutive test steps are displayed respectively.

In a graph display field 84, a graph indicating a transition of the environmental value corresponding to the environmental condition having been set is displayed.

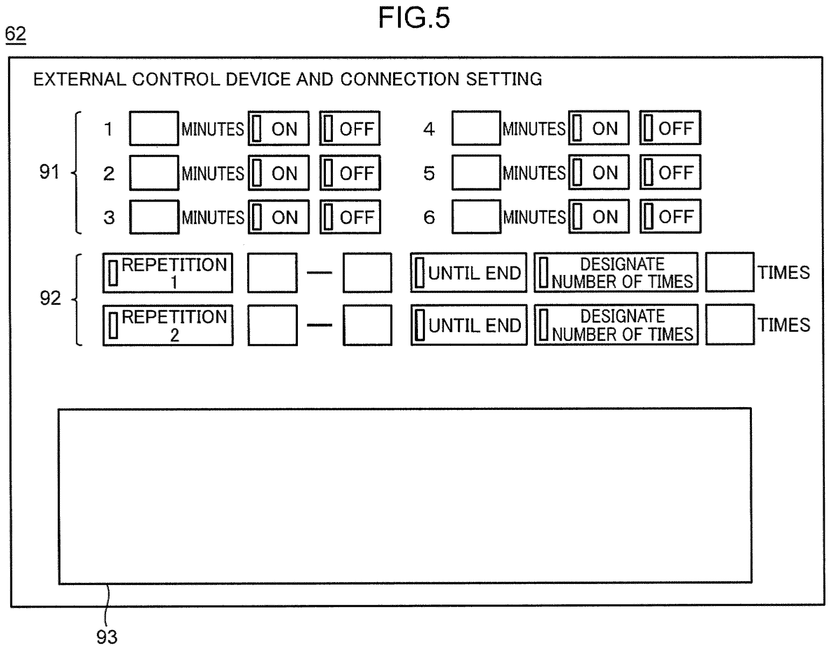

Fig. 5 is a simplified view illustrating an example of the input screen 62 for the connection condition in the program operation. The operator can call up the input screen 62 by selecting the icon 80 of the input screen 61. Image data of the input screen 62 is transmitted from the setting device 1 to the operation terminal 4 via the communication network 5, and the input screen 62 is displayed on the display unit 23 of the operation terminal 4. The operator inputs data onto the input screen 62 by the input unit 21 with keyboard operation, mouse operation, or the like.

In an input selection field 91, a setting value of time is input to each of a plurality of (six in this example) condition input fields, and operation setting of the relay (on or off of the relay) within each set time having been input is selected. However, the number of settable condition input fields is not limited to six, and may be any number other than one. Thus, on the input screen 62 in one test step, an on period and an off period of the relay in one test step can be set independently of the setting of the environmental condition.

In an input selection field 92, a plurality of (two in this example) repetition patterns are input, and setting of repetition of on and off of the relay is performed. However, the number of settable repetition patterns is not limited to two, and may be any number of 1 or greater. Specifically, in the input selection field 92, the presence or absence of repetition control is selected, and the number of each of the condition to be the beginning and the condition to be the end of the repetition among a plurality of conditions included in the input selection field 91 is input. In the input selection field 92, it is selected whether to repeatedly continue the set condition until the test step ends or repeatedly continue the set condition a designated number of times. When continuation of the designated number of times is selected, the number of times of repetition is input. The number of times of repetition is not limited to a plurality of times, that is, a condition that is set only once may be executed.

A graph display field 93 displays a graph indicating a transition of on or off of the relay corresponding to the connection condition having been set.

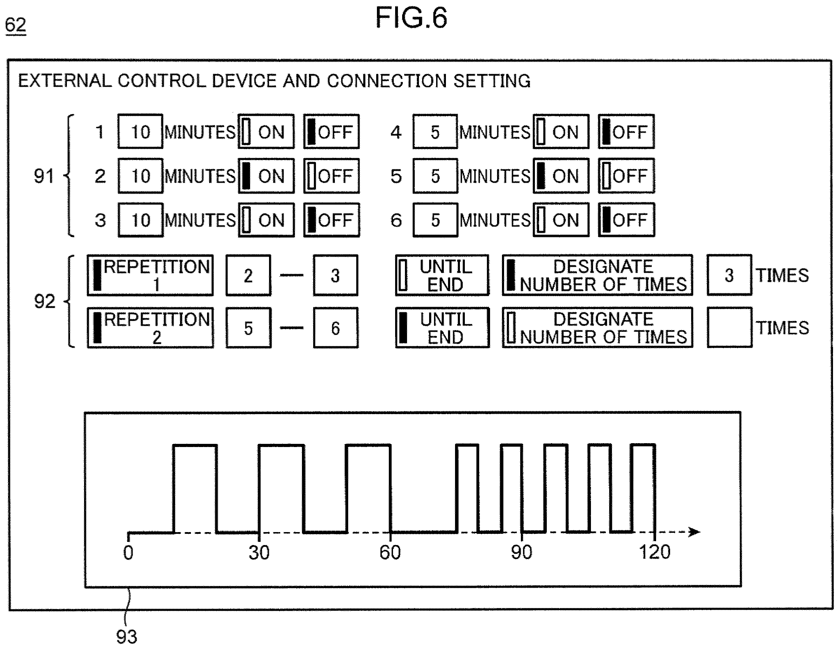

Fig. 6 is a simplified view illustrating an example of the input screen 62 on which data is input.

In the input selection field 91, an off period of 10 minutes is set in a condition input field 1, an on period of 10 minutes is set in a condition input field 2, an off period of 10 minutes is set in a condition input field 3, an off period of 5 minutes is set in a condition input field 4, an on period of 5 minutes is set in a condition input field 5, and an off period of 5 minutes is set in a condition input field 6.

In the input selection field 92, repeating three times the conditions from the condition input field 2 to the condition input field 3 is set as a repetition pattern 1, and repeating the conditions from the condition input field 5 to the condition input field 6 until the end of the test step is set as a repetition pattern 2.

As a result of the data input to the input selection fields 91 and 92, the graph display field 93 displays a graph having a shape with off in the period of 0 to 10 minutes, on for 10 minutes and off for 10 minutes are repeated three times in the period of 10 to 70 minutes, off in the period of 70 to 75 minutes, and on for 5 minutes and off for 5 minutes are repeated in the period after 75 minutes until the end of the test step.

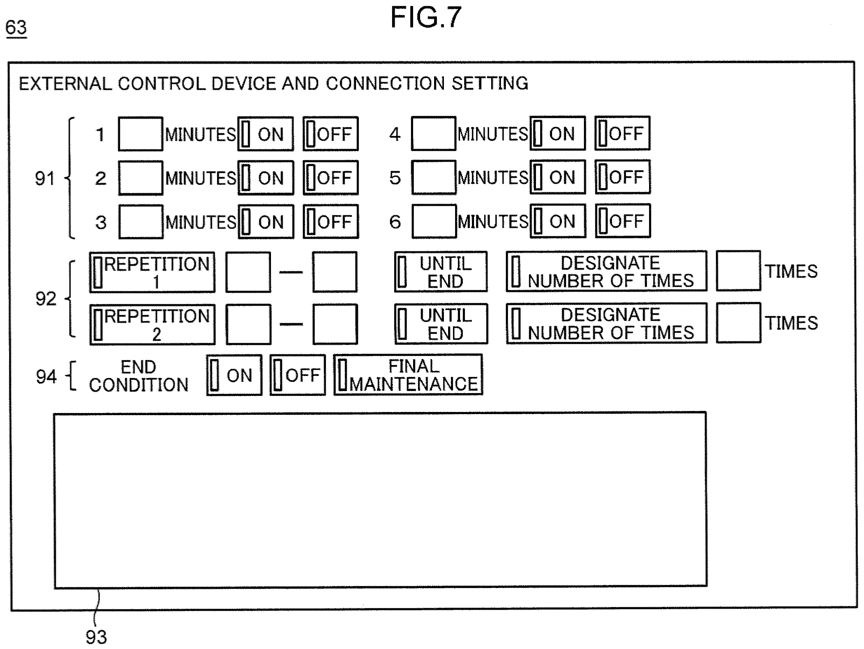

Fig. 7 is a simplified view illustrating an example of the input screen 63 for the connection condition in the constant value operation. The input selection fields 91 and 92 and the graph display field 93 are same as those of the input screen 62 illustrated in Fig. 5.

In an input selection field 94, any of on, off, and final maintenance is selected as a connection condition after the connection control between the environment test device 2 and the external control device 3 ends. In a case where on is selected in the input selection field 94, the relay is forcibly set to on after the end of the connection control based on the input selection fields 91 and 92. In a case where off is selected in the input selection field 94, the relay is forcibly set to off after the end of the connection control. In a case where final maintenance is selected in the input selection field 94, after the end of the connection control, the relay is maintained in the state at the time point of the end of the connection control.

The input selection field 94 may be omitted on the input screen 63 regarding the constant value operation, or the input selection field 94 may be added on the input screen 62 regarding the program operation. In the example of the present embodiment, the program operation and the constant value operation can be switched and executed in one environment test device 2, but an environment test device may be able to execute only the program operation or an environment test device may be able to execute only the constant value operation. Furthermore, in the environment test device 2 that can execute both the program operation and the constant value operation, regarding the environmental condition or the connection condition, different input screens may be used for the program operation and the constant value operation, or a common input screen may be used.

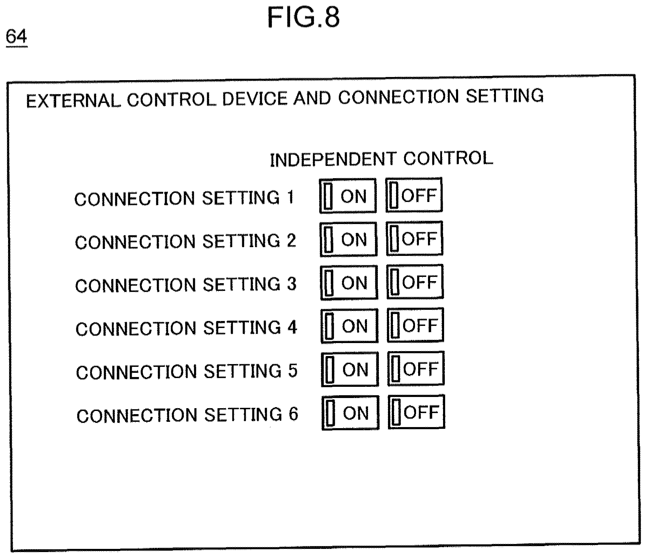

Fig. 8 is a simplified view illustrating an example of a setting screen 64 displayed on the display unit 23 of the operation terminal 4. On the setting screen 64, a plurality of connection conditions between the environment test device 2 and the external control device 3 can be set. In this example, six connection settings 1 to 6 can be set, but the present invention is not limited to this. In each connection setting 1 to 6, the operator can select whether or not to perform independent control of connection conditions. When on of the independent control is selected, the processing unit 42 can set the connection condition independently of the setting of the environmental condition as described in the above embodiment. When off of the independent control is selected, similarly to the conventional technique, the processing unit 42 sets the connection condition to one of on and off for each test step in the program operation, and sets the connection condition to one of on and off regarding the entire period in the constant value operation, or divides the constant value operation into steps in accordance with the on-off condition to be set.

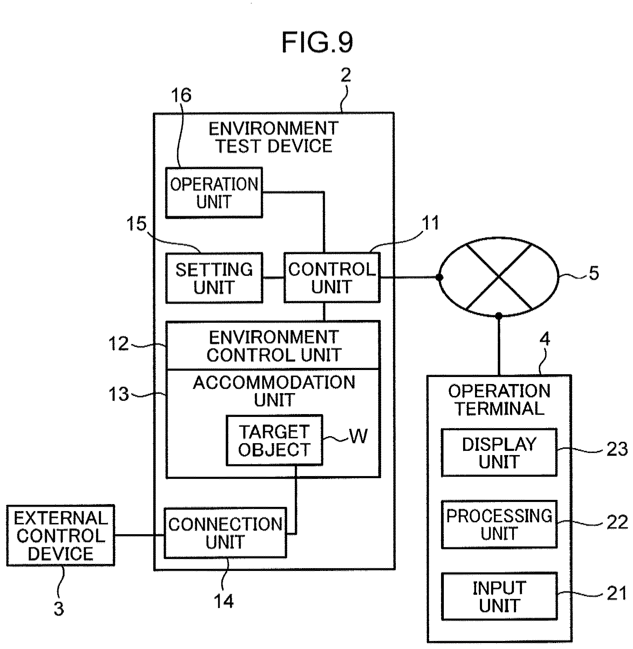

Fig. 9 is a view illustrating the configuration of an environment test device 2 according to the first modification. The functions of the setting device 1 and the operation terminal 4 illustrated in Fig. 1 are implemented in the environment test device 2. The environment test device 2 includes a setting unit 15 having a function same as that of the setting device 1 and an operation unit 16 having a function same as that of the operation terminal 4. However, the implementation of the operation unit 16 to the environment test device 2 may be omitted, and the environment setting information and the connection setting information may be transmitted from the operation terminal 4 to the setting unit 15 via the communication network 5.

The setting unit 15 includes the data processing unit 31, the data communication unit 32, and the data storage unit 33 same as those in Fig. 2. The data processing unit 31 includes the acquisition unit 41, the processing unit 42, and the output unit 43 same as those in Fig. 2. The data communication unit 32 is connected to the control unit 11. The data processing unit 31 may be shared with a control unit or a data processing unit (not illustrated) included in the environment test device 2. The data storage unit 33 may be shared with a data storage unit (not illustrated) included in the environment test device 2. The acquisition unit 41 acquires environment setting information and connection setting information, the processing unit 42 generates operation control information based on the environment setting information and the connection setting information acquired by the acquisition unit 41, and the output unit 43 outputs the operation control information generated by the processing unit 42. The processing unit 42 can set the connection condition independently of the setting of the environmental condition. The operation control information output from the output unit 43 is input to the control unit 11 via the data communication unit 32. The control unit 11 controls the operations of the environment control unit 12 and the relay based on the operation control information having been input.

The operation unit 16 includes the display unit 23, the processing unit 22, and the input unit 21 same as those in Fig. 1. The display unit 23, the processing unit 22, and the input unit 21 included in the operation unit 16 may be shared with the display unit, the processing unit, and the input unit (not illustrated) included in the environment test device 2, respectively. The control unit 11 and the setting unit 15 may be connected to the operation terminal 4 via the communication network 5. That is, the setting unit 15 may transmit the image data of the input screens 61 to 63 and the setting screen 64 to the operation terminal 4 and receive the environment setting information and the connection setting information from the operation terminal 4. The operation terminal 4 and the communication network 5 may be omitted.

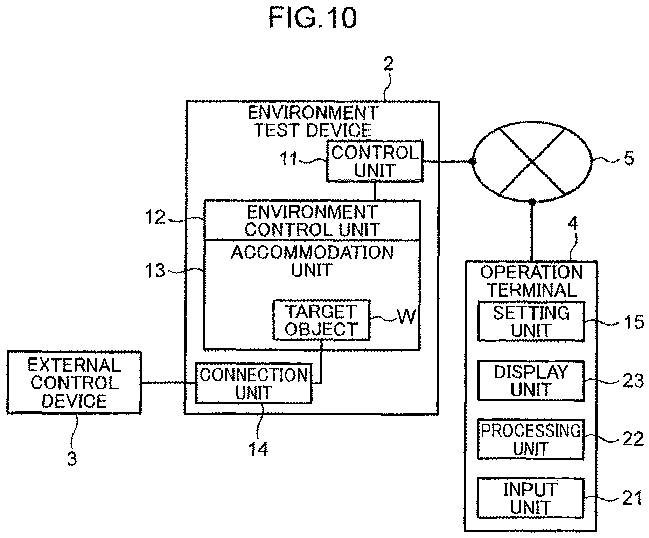

Fig. 10 is a view illustrating the configuration of an environment test device 2 according to the second modification. The function of the setting device 1 illustrated in Fig. 1 is implemented in the operation terminal 4. The operation terminal 4 includes the setting unit 15 having the same function as that of the setting device 1. The setting unit 15 includes the data processing unit 31, the data communication unit 32, and the data storage unit 33 same as those in Fig. 2. The data processing unit 31 includes the acquisition unit 41, the processing unit 42, and the output unit 43 same as those in Fig. 2. The data processing unit 31 may be shared with the processing unit 22 included in the operation terminal 4. The data storage unit 33 may be shared with a data storage unit (not illustrated) included in the operation terminal 4. The acquisition unit 41 acquires environment setting information and connection setting information, the processing unit 42 generates operation control information based on the environment setting information and the connection setting information acquired by the acquisition unit 41, and the output unit 43 outputs the operation control information generated by the processing unit 42. The processing unit 42 can set the connection condition independently of the setting of the environmental condition. The operation control information output from the output unit 43 is input to the control unit 11 via the data communication unit 32 and the communication network 5. The control unit 11 controls the operations of the environment control unit 12 and the relay based on the operation control information having been input. In place of connecting the operation terminal 4 to the communication network 5, the operation control information generated by the setting unit 15 included in the operation terminal 4 may be stored in a storage medium such as a USB memory, and the control unit 11 may read the operation control information from the storage medium.

According to the present embodiment, the processing unit 42 can set the connection condition independently of the setting of the environmental condition. Therefore, in the program operation having a plurality of test steps, it is only necessary to divide the test step in accordance with the change of the environmental condition, and it is not necessary to finely divide the test step in accordance with the switching of the connection condition, and therefore the efficiency of data input work by the operator can be improved. In the constant value operation in which the environmental value of the environmental condition is constant, it is possible to optionally switch on or off of current application to the target object W by setting the connection condition independent of the environmental condition, and therefore it is possible to perform a minute environment test.

According to the present embodiment, the conduction period or the interrupt period between the environment test device 2 and the external control device 3 can be optionally set by the connection setting information.

According to the present embodiment, the number of times of repetition of the conduction period and the interrupt period and the like can be optionally set by the connection setting information.

According to the present embodiment, the connection condition after the connection control between the environment test device 2 and the external control device 3 ends can be optionally set by the connection setting information.

A setting device according to one aspect of the present invention is a setting device that sets operation control information for controlling operation of an environment forming device, the setting device including: an acquisition unit that acquires environment setting information for setting an environmental condition formed by the environment forming device and connection setting information for setting a connection condition between a target object that is loaded with the environmental condition and an external control device; a processing unit that generates the operation control information based on the environment setting information and the connection setting information that are acquired by the acquisition unit; and an output unit that outputs the operation control information generated by the processing unit, in which the processing unit is capable of setting the connection condition independently of setting of the environmental condition.

According to the present aspect, the processing unit can set the connection condition independently of the setting of the environmental condition. Therefore, in the program operation having a plurality of test steps, it is only necessary to divide the test step in accordance with the change of the environmental condition, and it is not necessary to finely divide the test step in accordance with the switching of the connection condition, and therefore the efficiency of data input work by the operator can be improved. In the constant value operation in which the environmental value of the environmental condition is constant, it is possible to optionally switch on or off of current application to the test target object by setting the connection condition independent of the environmental condition, and therefore it is possible to perform a minute environment test.

In the above aspect, the processing unit can change and set the connection condition for the one environmental condition.

According to the present aspect, the connection condition can be changed and set for one test step in the program operation, and the connection condition can be changed and set for a constant environmental value in the constant value operation, and therefore it is possible to perform a minute environment test.

In the above aspect, the connection setting information includes setting information of a conduction period for connecting the target object and the external control device, and setting information of an interrupt period for not connecting the target object and the external control device.

According to the present aspect, the conduction period or the interrupt period between the target object and the external control device can be optionally set by the connection setting information.

In the above aspect, the connection setting information further includes setting information of repetition of the conduction period and the interrupt period.

According to the present aspect, the number of times of repetition of the conduction period and the interrupt period and the like can be optionally set by the connection setting information.

In the above aspect, the connection setting information includes a connection condition after connection control between the target object and the external control device ends.

According to the present aspect, the connection condition after the connection control between the environment forming device and the external control device ends can be optionally set by the connection setting information.

A program according to one aspect of the present invention causes a processor mounted in a setting device that sets operation control information for controlling operation of an environment forming device to execute an acquisition step of acquiring environment setting information for setting an environmental condition formed by the environment forming device and connection setting information for setting a connection condition between a target object that is loaded with the environmental condition and an external control device, a processing step of generating the operation control information based on the environment setting information and the connection setting information that are acquired in the acquisition step, and an output step of outputting the operation control information generated in the processing step, in which in the processing step, the connection condition is allowed to be set independently of setting of the environmental condition.

According to the present aspect, in the processing step, the connection condition can be set independently of the setting of the environmental condition. Therefore, in the program operation having a plurality of test steps, it is only necessary to divide the test step in accordance with the change of the environmental condition, and it is not necessary to finely divide the test step in accordance with the switching of the connection condition, and therefore the efficiency of data input work by the operator can be improved. In the constant value operation in which the environmental value of the environmental condition is constant, it is possible to optionally switch on or off of current application to the test target object by setting the connection condition independent of the environmental condition, and therefore it is possible to perform a minute environment test.

An environment forming device according to one aspect of the present invention is an environment forming device including: an accommodation unit that accommodates a target object; an environment control unit that controls an environment in the accommodation unit; and a setting unit that sets operation control information for controlling operation of the environment forming device, in which the setting unit includes an acquisition unit that acquires environment setting information for setting an environmental condition formed by the environment forming device and connection setting information for setting a connection condition between the target object and an external control device, a processing unit that generates the operation control information based on the environment setting information and the connection setting information that are acquired by the acquisition unit, and an output unit that outputs the operation control information generated by the processing unit, and the processing unit is capable of setting the connection condition independently of setting of the environmental condition.

According to the present aspect, the processing unit can set the connection condition independently of the setting of the environmental condition. Therefore, in the program operation having a plurality of test steps, it is only necessary to divide the test step in accordance with the change of the environmental condition, and it is not necessary to finely divide the test step in accordance with the switching of the connection condition, and therefore the efficiency of data input work by the operator can be improved. In the constant value operation in which the environmental value of the environmental condition is constant, it is possible to optionally switch on or off of current application to the test target object by setting the connection condition independent of the environmental condition, and therefore it is possible to perform a minute environment test.

A setting method according to one aspect of the present disclosure is a setting method for setting operation control information for controlling operation of an environment forming device, the setting method including: an acquisition step of acquiring environment setting information for setting an environmental condition formed by the environment forming device and connection setting information for setting a connection condition between a target object that is loaded with the environmental condition and an external control device; a processing step of generating the operation control information based on the environment setting information and the connection setting information that are acquired in the acquisition step; and an output step of outputting the operation control information generated in the processing step, in which in the processing step, the connection condition is allowed to be set independently of setting of the environmental condition.

According to the present aspect, in the processing step, the connection condition can be set independently of the setting of the environmental condition. Therefore, in the program operation having a plurality of test steps, it is only necessary to divide the test step in accordance with the change of the environmental condition, and it is not necessary to finely divide the test step in accordance with the switching of the connection condition, and therefore the efficiency of data input work by the operator can be improved. In the constant value operation in which the environmental value of the environmental condition is constant, it is possible to optionally switch on or off of current application to the test target object by setting the connection condition independent of the environmental condition, and therefore it is possible to perform a minute environment test.

## Claims

1. A setting device that sets operation control information for controlling operation of an environment forming device, the setting device comprising:
an acquisition unit that acquires environment setting information for setting an environmental condition formed by the environment forming device and connection setting information for setting a connection condition between a target object that is loaded with the environmental condition and an external control device;
a processing unit that generates the operation control information based on the environment setting information and the connection setting information that are acquired by the acquisition unit; and
an output unit that outputs the operation control information generated by the processing unit,
wherein the processing unit is capable of setting the connection condition independently of setting of the environmental condition.

2. The setting device according to claim 1, wherein the processing unit is capable of changing and setting the connection condition for one of the environmental conditions.

3. The setting device according to claim 1, wherein the connection setting information includes setting information of a conduction period for connecting the target object and the external control device, and setting information of an interrupt period for not connecting the target object and the external control device.

4. The setting device according to claim 3, wherein the connection setting information further includes setting information of repetition of the conduction period and the interrupt period.

5. The setting device according to any one of claims 1 to 4, wherein the connection setting information includes a connection condition after connection control between the target object and the external control device ends.

6. A program that causes a processor mounted in a setting device that sets operation control information for controlling operation of an environment forming device to execute
an acquisition step of acquiring environment setting information for setting an environmental condition formed by the environment forming device and connection setting information for setting a connection condition between a target object that is loaded with the environmental condition and an external control device,
a processing step of generating the operation control information based on the environment setting information and the connection setting information that are acquired in the acquisition step, and
an output step of outputting the operation control information generated in the processing step,
wherein in the processing step, the connection condition is allowed to be set independently of setting of the environmental condition.

7. An environment forming device comprising:
an accommodation unit that accommodates a target object;
an environment control unit that controls an environment in the accommodation unit; and
a setting unit that sets operation control information for controlling operation of the environment forming device,
wherein the setting unit includes
an acquisition unit that acquires environment setting information for setting an environmental condition formed by the environment forming device and connection setting information for setting a connection condition between the target object and an external control device,
a processing unit that generates the operation control information based on the environment setting information and the connection setting information that are acquired by the acquisition unit, and
an output unit that outputs the operation control information generated by the processing unit, and
the processing unit is capable of setting the connection condition independently of setting of the environmental condition.

8. A setting method for setting operation control information for controlling operation of an environment forming device, the setting method comprising:
an acquisition step of acquiring environment setting information for setting an environmental condition formed by the environment forming device and connection setting information for setting a connection condition between a target object that is loaded with the environmental condition and an external control device;
a processing step of generating the operation control information based on the environment setting information and the connection setting information that are acquired in the acquisition step; and
an output step of outputting the operation control information generated in the processing step,
wherein in the processing step, the connection condition is allowed to be set independently of setting of the environmental condition.
